# EUROPEAN PATENT SPECIFICATION

(11) **EP 3 338 387 B1**
(45) Date of publication and mention of the grant of the patent: **23.09.2020**
(21) Application number: 15821193.8
(22) Date of filing: 11.12.2015
(51) Int. Cl.: H04L 1/16, H04L 29/06, H04W 72/12, H04W 88/06, H04W 88/10, H04L 12/801

(54) **PACKET DATA CONVERGENCE PROTOCOL FOR CELLULAR/WIRELESS LOCAL AREA NETWORK AGGREGATION**
PAKETDATENKONVERGENZPROTOKOLL FÜR ZELLULARE/DRAHTLOSE LOKALE NETZWERKAGGREGATION
PROTOCOLE DE CONVERGENCE DE DONNÉES EN PAQUETS POUR AGRÉGATION DE RÉSEAU LOCAL CELLULAIRE/SANS FIL

(30) Priority: 21.08.2015 US 201562208191 P
(43) Date of publication of application: 27.06.2018
(73) Proprietor: Intel IP Corporation, Santa Clara, CA 95054 (US)
(72) Inventor: SIROTKIN, Alexander, Hod Hasharon 4529555 (IL); DEPARIS, François, 90513 Zirndorf (DE); PARRON, Jerome, Fuerth BY 90768 (DE); KUGLER, Martin, 85586 Poing / BY (DE)
(74) Representative: HGF
(86) International application number: PCT/US2015/065371
(87) International publication number: WO 2017/034603

(56) References cited:
- US-A1- 2015 117 357
- PANASONIC: "RLC PDU format for LTE", 3GPP DRAFT; R2-072653, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Orlando, USA; 20070622, 22 June 2007 (2007-06-22), XP050135449, [retrieved on 2007-06-22]
- INTEL CORPORATION: "Challenges in the uplink to support dual connectivity", 3GPP DRAFT; R2-131986, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20130520 - 20130525 11 May 2013 (2013-05-11), XP050700113, Retrieved from the Internet: URL:http://www.3gpp.org/ftp/tsg_ran/WG2_RL 2/TSGR2_82/Docs/ [retrieved on 2013-05-11]
- NOKIA NETWORKS: "3C user-plane architecture for LTE-WLAN aggregation", 3GPP DRAFT; R2-152105 3C FOR LTE-WLAN AGGREGATION_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20150525 - 20150529 15 May 2015 (2015-05-15), XP050971430, Retrieved from the Internet: URL:http://www.3gpp.org/ftp/tsg_ran/WG2_RL 2/TSGR2_90/Docs/ [retrieved on 2015-05-15]

## Description

The present application claims priority to U.S. Provisional Application Serial No. 62/208,191, filed August 21, 2015.

### Technical Field

The present disclosure relates to the field of wireless communications. In particular, the present disclosure relates to aggregation of packet data convergence protocol (PDCP) packet data units (PDUs) within a transmission system utilizing long term evolution (LTE), or any other cellular radio technology, and wireless local area networks (WLANs).

### Background

The background description provided herein is for the purpose of generally presenting the context of the disclosure. Unless otherwise indicated herein, the materials described in this section are not prior art to the claims in this application and are not admitted to be prior art by inclusion in this section.

In legacy WLAN deployments utilized for LTE and WLAN link aggregation systems (such as LTE WiFi link aggregation (LWA) systems) utilizing a non-collocated eNodeB (eNB) and WLAN termination point (WT) configuration, there often is no interface for providing feedback from the WT to the eNB concerning whether PDCP PDUs transmitted over a WLAN link are correctly received by user equipment UE.

Alternatively, the Xw interface may be available, but legacy WLAN network equipment may not be able to provide per-bearer flow control information/feedback. Without feedback, the aggregation systems may present issues of hyper frame number de-synchronization, which is due to sequence numbers (SNs) associated with the PDCP PDUs being limited in bit size, and failures to efficiently balance the PDUs sent across the WLAN link and a LTE link. Additionally, without flow control LWA performance gains may be limited. Due to these issues, the benefit of link aggregation is often negated.

US2015117357 relates to techniques for aggregating data from a wireless wide area network (WWAN) and wireless local area network (WLAN). A packet convergence entity (e.g., PDCP layer entity) communicates with first and second radio access technology (RAT) links. The packet convergence entity may determine from which of the first and second RAT links a data packet is received and may monitor a sequence number value of each of the received data packets. The packet convergence entity may perform one or more actions based on a determination that the data packets are received out of order. For example, the packet convergence entity may deliver the data packets to an upper layer entity as they are received (e.g., in order or out of order), may reorder the data packets and ignore data packet losses, and/or may request retransmissions of missing data packets.

PANASONIC, "RLC PDU format for LTE", 3GPP DRAFT; R2-072653, 3RD GENERATION PARTNERSHIP PROJECT (3GPP), RAN WG2, relates to RLC PDU format for the acknowledged mode (AM).

INTEL CORPORATION, "Challenges in the uplink to support dual connectivity", RAN WG2, 3GPP DRAFT; R2-131986, 3RD GENERATION PARTNERSHIP PROJECT (3GPP), relates to support of dual connectivity for single UL CC capable UEs.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
Figure 1 illustrates an example communication system, according to various embodiments.
Figure 2 illustrates an example PDU numbering element, according to various embodiments.
Figure 3 illustrates an example PDCP SN numbering space, according to various embodiments.
Figure 4 illustrates an example PDCP SN numbering space after a reordering window shift, according to various embodiments.
Figure 5 illustrates an example signal diagram for a communication system, according to various embodiments.
Figure 6 illustrates an example PDCP data PDU configuration with an embedded poll request, according to various embodiments.
Figure 7 illustrates an example LTE Wi-Fi link aggregation PDCP control poll PDU, according to various embodiments.
Figure 8 illustrates another example PDCP data PDU configuration with an embedded poll request and data radio bearer identifier, according to various embodiments.
Figure 9 illustrates an example electronic device that may employ the apparatuses and/or methods described herein.
Figure 10 illustrates an example computer-readable storage medium that may be suitable for use to store instructions that cause an apparatus, in response to execution of the instructions by the apparatus, to practice selected aspects of the present disclosure.

### Detailed Description

The invention is defined and limited by the scope of appended claims. In the following description, any embodiments referred to and not falling within the scope of the appended claims, are merely examples useful to the understanding of the invention.

Apparatuses, systems and methods associated with long term evolution (LTE), or any other cellular radio technology, and wireless local area network aggregation are disclosed herein. LTE may include LTE, LTE-advanced (LTE-A), and/or any other releases and/or updates to LTE. The apparatuses, systems and methods described herein may relate to and/or be implemented in wireless local area network (WLAN) deployment scenarios where network based feedback/flow control may not have been previously available by the Xw interface and per-bearer feedback may have not been previously available in legacy apparatuses, systems and methods.

In embodiments, an evolved NodeB (eNB) for requesting feedback from a packet data convergence protocol (PDCP) receiver may include radio frequency (RF) circuitry and baseband circuitry coupled with the RF circuitry. The baseband circuitry may identify a packet data unit (PDU) to be transmitted to the PDCP receiver, the PDCP receiver to aggregate a first group of PDUs transmitted via a LTE link and a second group of PDUs transmitted via a wireless local area network (WLAN) link. The baseband circuitry may further embed, within the PDU, a poll request for a status of aggregation by the PDCP receiver and cause the RF circuitry to transmit the PDU embedded with the poll request to the PDCP receiver.

The apparatuses, systems and methods described herein may provide for feedback regarding transmission of the PDUs, which was not available in legacy systems. The apparatuses, systems and methods may allow for a polling process by a PDCP transmitter that is flexible and efficient as the polling process may be initiated when the PDCP transmitter judges, based on criteria described throughout this disclosure, that feedback is desired. Additionally, recovery mechanisms and/or remedial actions are easier to define than legacy systems based on the feedback received.

In the following detailed description, reference is made to the accompanying drawings which form a part hereof wherein like numerals designate like parts throughout, and in which is shown by way of illustration embodiments that may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims.

Aspects of the disclosure are disclosed in the accompanying description. Alternate embodiments of the present disclosure and their equivalents may be devised without parting from the scope of the claims. It should be noted that like elements disclosed below are indicated by like reference numbers in the drawings.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

The description may use the phrases "in an embodiment," "in some embodiments," or "in embodiments," which may each refer to one or more of the same or different embodiments. Furthermore, the terms "comprising," "including," "having," and the like, as used with respect to embodiments of the present disclosure, are synonymous.

As used herein, the term "circuitry" may refer to, be part of, or include an Application Specific Integrated Circuit (ASIC), an electronic circuit, a processor (shared, dedicated, or group) and/or memory (shared, dedicated, or group) that execute one or more software or firmware programs, a combinational logic circuit, and/or other suitable components that provide the described functionality.

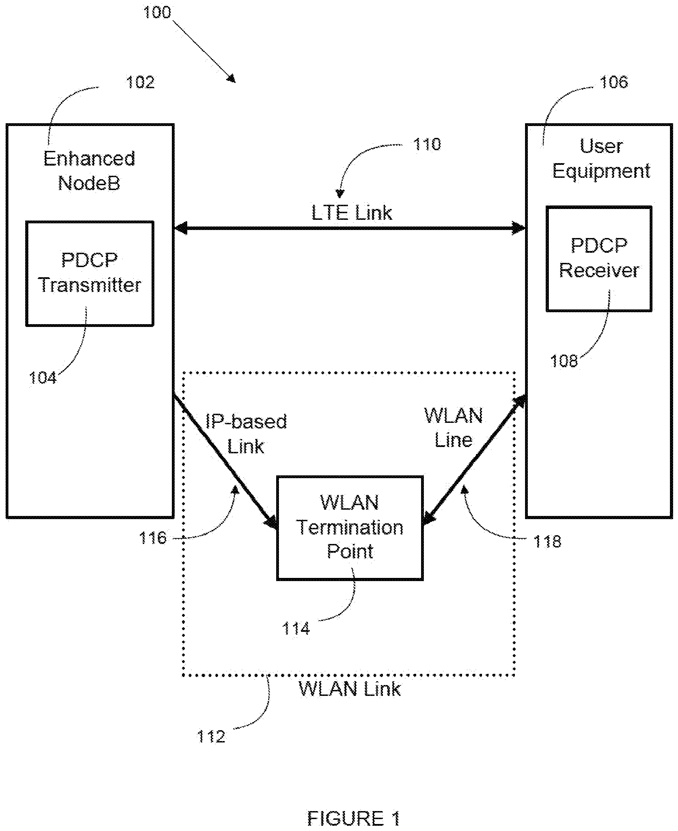

Referring now to Figure 1, wherein a communication system 100, according to various embodiments, is shown. The communication system 100 may include an enhanced NodeB (eNB) 102. The eNB 102 may include a PDCP transmitter 104. The PDCP transmitter 104 may generate PDUs for transmission. The PDCP transmitter 104 may associate a hyper frame number (HFN) and PDCP sequence number (SN) combination with each of the generated PDUs for transmission. The HFN may be stored internally on the PDCP transmitter 104 and/or a PDCP receiver 108 and may indicate a number of wrap-arounds of a reorganizing window.

The communication system 100 may further include a user equipment (UE) 106. The UE 106 may include the PDCP receiver 108. The PDCP transmitter 104 of the eNB 102 may transmit the PDUs to the PDCP receiver 108. In response to receiving the PDUs, the PDCP receiver 108 may arrange the received PDUs in order based on the HFN and PDCP SN combination associated with each of the PDUs.

The eNB 102 and the UE 106 may be communicatively coupled by a LTE link 110 and a WLAN link 112. The PDCP transmitter 104 of the eNB 102 may transmit a first set of the PDUs to the PDCP receiver 108 of the UE 106 via the LTE link 110 and a second set of the PDUs to the PDCP receiver 108 via the WLAN link 112. The PDCP receiver 108 may receive both the first set of the PDUs transmitted across the LTE link 110 and the second set of the PDUs transmitted across the WLAN link 112, and may arrange the first set of the PDUs and the second set of the PDUs based on the HFN and PDCP SN combination associated with each of the PDUs.

The WLAN link 112 may include a WLAN termination point (WT) 114. The WT 114 may be communicatively coupled to the eNB 102 by an internet protocol (IP)-based link 116 and to the UE 106 by a WLAN transmission path 118. The eNB 102 and the WT 114 may be non-collocated and there may be no interface for reporting feedback from the WT 114 to the eNB 102. The LTE link 110, on the other hand, may operate in radio link control (RLC) acknowledged mode (AM), allowing for feedback about the first set of the PDUs transmitted across the LTE link 110.

While the communication system 100 is described with a single eNB, it is to be understood that, in some embodiments, there may be more than one eNB. In communication systems with more than one eNB, each of the eNBs may be communicatively coupled to the UE 106 via corresponding LTE links and WLAN links and may transmit PDUs from each of the eNBs across the corresponding LTE links, the corresponding WLAN links, or some combination thereof. Each of the eNBs may include a PDCP transmitter and the PDCP transmitters for each of the eNBs may be able to communicate and organize transmission of the PDUs with each of the other PDCP transmitters in the communication system. Accordingly, any methods and/or operations described as being performed by a single eNB or a single PDCP transmitter may, alternatively, be performed by multiple eNBs and/or multiple PDCP transmitters.

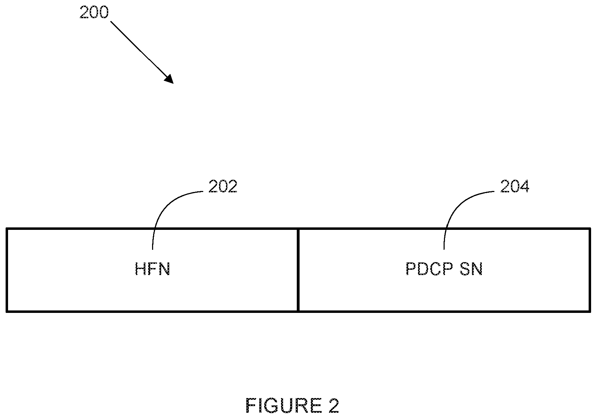

Referring now to Figure 2, a PDU numbering element 200 is shown according to various embodiments. The PDU numbering element 200 may include an HFN storage space 202 and a PDCP SN storage space 204. The PDU numbering element 200 may have 32-bits total allocated for both the HFN storage space 202 and the PDCP SN storage space 204. Each of the PDUs generated by the PDCP transmitter 104 of Figure 1 may include a PDU numbering element and may store an HFN and PDCP SN combination that indicates an order of the PDU relative to the other PDUs being generated by the PDCP transmitter 104. The HFN and the PDCP SN may be stored in the HFN storage space 202 and the PDCP SN storage space 204, respectively.

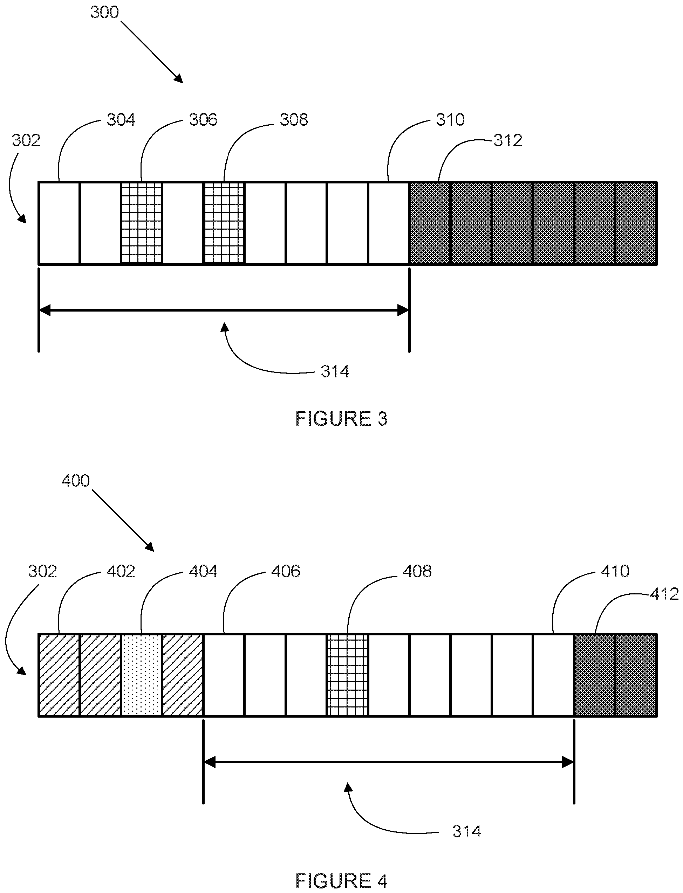

The HFN may indicate and/or be associated with a number of wrap-arounds of a reorganizing window, as is discussed further in Figure 3 and Figure 4. The PDCP transmitter 104 may associate an HFN that indicates and/or is associated with the current number of wrap-arounds with each of the PDUs to be transmitted. Both the PDCP transmitter 104 and the PDCP receiver 108 may be aware of the HFN, such that the PDUs are ordered correctly by the PDCP receiver and to avoid errors in deciphering the PDUs.

The PDCP SN storage space 204 may store a SN that indicates an order of a PDU relative to other PDUs associated with the same HFN. The HFN and PDCP SN combination may be used for deciphering (arranging in order based on the HFN and the PDCP SN) the PDUs transmitted by the PDCP transmitter 104 to the PDCP receiver 108 of Figure 1.

Referring now to Figure 3, a PDCP SN numbering space 300 is shown according to various embodiments. The PDCP SN numbering space 300 may include one or more spaces 302 to receive PDUs. Each of the one or more spaces 302 may be associated with a particular SN. The PDCP SN numbering space 300 may correspond to a particular PDCP receiver, such as the PDCP receiver 108 of Figure 1. In response to receiving a PDU, the PDCP receiver may identify a SN associated with the PDU and move the PDUs to a space associated with a particular SN corresponding to the SN associated with the PDU.

A reordering window 314 may extend from a first space 304 of the PDCP SN numbering space 300 to a second space 310 of the PDCP SN numbering space 300. The reordering window 314 may encompass a number of spaces less than or equal to half of the one or more spaces 302 included in the PDCP SN numbering space 300.

A PDCP transmitter, such as the PDCP transmitter 104 of Figure 1, may transmit a number of PDUs equal to or less than the number of spaces encompassed by the reordering window 314. The PDUs transmitted by the PDCP may include SNs corresponding to the SNs associated with the spaces encompassed by the reordering window 314. In response to receiving the PDUs, the PDU receiver may move the PDUs to the respective spaces encompassed by the reordering window 314 according to the SNs associated with each of the PDUs, such as the PDU moved into the first space 304 (as indicated by the first space 304 being white).

The PDCP transmitter may not transmit PDUs with SNs corresponding to the SNs associated with the spaces subsequent to the reordering window 314 in the PDCP SN numbering space 300. Accordingly, those spaces may remain empty, such as empty space 312 (as indicated by the cross-hatching).

In some instances, one or more of the PDUs transmitted by the PDCP transmitter may not be received by the PDCP receiver or may be corrupted such that the PDCP receiver may be unable to move the PDUs to the respective spaces according to the SNs associated with the PDUs. The PDUs not received or corrupted may be considered missing and the spaces corresponding to the missing PDUs may remain empty, such as first empty space 306 and second empty space 308 (as indicated by the crossing lines).

Referring now to Figure 4, a PDCP SN numbering space 400 after a reordering window shift has occurred is shown according to various embodiments. The PDCP SN numbering space 400 may include the one or more spaces 302, as described in relation to the PDCP SN numbering space 300 of Figure 3.

The reordering window 314 may have been shifted from the original location, illustrated in Figure 3, which extended from the first space 304 to the second space 310 of Figure 3 to a new location that extends from a first space 406 to a second space 410. The reordering window 314 may have been shifted to the new location based on one of the missing PDUs. In particular, the reordering window 314 may have been shifted such that the lowest SN encompassed by the new location of the reordering window corresponds to the highest SN of a missing PDU in the original location of the reordering window, such as the second empty space 308 of Figure 3.

In some embodiments, shifting of the reordering window 314 may result in the reordering window 314 extending beyond the spaces of the PDCP SN numbering space 400. In this instance, the reordering window 314 will wrap-around to the first space of the PDCP SN numbering space 400 such that the space with the lowest SN encompassed by the new location of the reordering window 314 is the first space of the PDCP SN numbering space 400. In response to the reordering window wrapping around, an HFN, such as the HFN described in relation to the PDU numbering element 200 of Figure 2, may be incremented.

The reordering window 314 may have been shifted in response to the expiration of a reordering timer (t Reordering). The reordering timer may have been set to expire a certain period of time after a time when one of the PDUs was determined to be missing. In other embodiments, the reordering time may be set to expire a certain period of time after a particular PDU was received and/or after a certain number of PDUs were received.

The PDUs received by the PDCP receiver prior to the shift of the reordering window and not encompassed by the new location of the reordering window may be sent to upper layers, such as the PDU located at space 402 (as indicated by the diagonal lines). The spaces encompassed by the original location of the reordering window 314 that did not receive a PDU and are not encompassed by the new location of the reordering window may have remained empty, such as empty space 404 (as indicated by the dots) and the PDUs corresponding to the spaces may be considered missing. Accordingly, the PDUs associated with the empty spaces were not provided to the upper layers.

A PDCP transmitter, such as the PDCP transmitter 104 of Figure 1, may be to transmit a number of PDUs equal to or less than the number of spaces encompassed by the reordering window 314 to the PDCP receiver. As the new location of the reordering window 314 encompasses the second empty space 308 of Figure 3, the PDCP transmitter may again transmit the PDU associated with the second empty space 308, which in Figure 4 is labeled as the first space 406. Accordingly, the first space 406 may receive the PDU that was previously missing or corrupted when transmitted prior to the shift of the reordering window 314.

The PDUs transmitted by the PDCP transmitter may include SNs associated with the spaces encompassed by the new location of the reordering window 314. In response to receiving the PDUs, the PDU receiver may move the PDUs to the respective spaces encompassed by the new location of the reordering window 314 according to the SNs associated with the PDUs, such as a PDU is placed within the first space 406 (as indicated by the space being white). The PDCP transmitter may not transmit PDUs with SNs corresponding to the SNs associated with the spaces subsequent to the new location of the reordering window 314 in the PDCP SN numbering space 400. Accordingly, those spaces may remain empty, such as empty space 312 (as indicated by the cross-hatching).

In some instances, one or more of the PDUs transmitted by the PDCP transmitter may not be received by the PDCP receiver or may be corrupted such that the PDCP receiver may be unable to move the PDUs to the respective spaces according to the SNs associated with the PDUs. The PDUs not received or corrupted may be considered missing and the spaces corresponding to the missing PDUs may remain empty, such as empty space 408 (as indicated by the crossing lines).

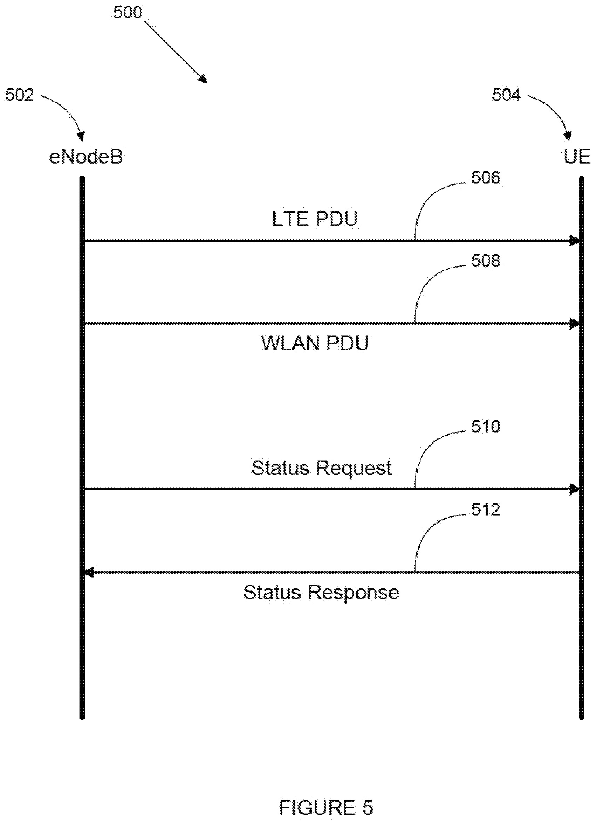

Referring now to Figure 5, wherein a signal diagram 500 for a communication system is shown according to various embodiments. The communication system may include any of the communication systems described throughout this disclosure, including the communication system 100 of Figure 1.

The signal diagram 500 illustrates signals, transmissions, and/or packets that may be transmitted between an eNB 502 and a UE 504. The eNB 502 may include any of the eNBs described throughout this disclosure, including the eNB 102 of Figure 1. The UE 504 may include any of the UEs described throughout this disclosure, including the UE 106 of Figure 1.

The eNB 502 may transmit one or more PDUs, referred to as LTE PDUs 506, across an LTE link, such as the LTE link 110 of Figure 1, to the UE 504. Each of the LTE PDUs 506 may include a PDU numbering element, such as the PDU numbering element 200 of Figure 2. The PDU numbering element may include an HFN and PDCP SN combination. In response to the reception of a LTE PDU, the UE 504 may move the LTE PDU to a corresponding space within a PDCP SN numbering space, such as by methods described in relation to the PDCP SN numbering space 300 of Figure 3 and/or the PDCP SN numbering space 400 of Figure 4.

The eNB 502 may further transmit one or more PDUs, referred to as WLAN PDUs 508, across a WLAN link, such as the WLAN link 112 of Figure 1, to the UE 504. Each of the WLAN PDUs 508 may include a PDU numbering element, such as the PDU numbering element 200 of Figure 2. The PDU numbering element may include an HFN and PDCP SN combination. In response to the reception of a WLAN PDU, the UE 504 may move the WLAN PDU to a corresponding space within a PDCP SN numbering space, such as by methods described in relation to the PDCP SN numbering space 300 of Figure 3 and/or the PDCP SN numbering space 400 of Figure 4.

The eNB 502 may further transmit a poll request signal 510 to the UE 504. The poll request signal 510 may be transmitted by the eNB 502 in response to the eNB 502 determining that it has transmitted a certain number of PDUs since the last poll request signal was transmitted, the expiration of a predetermined time interval, a trigger received by the eNB 502 from circuitry external to the eNB 502, any indication that a PDU scheduled for transmission by the eNB 502 failed to be sent or became corrupted, or some combination thereof. The poll request 510 may be transmitted across a LTE link, such as the LTE link 110 of Figure 1, a WLAN link, such as the WLAN link 112 of Figure 1, or some combination thereof.

The poll request signal 510 may include one or more bits embedded within a PDU transmitted from the eNB 502 to the UE 504 or may be embedded within multiple PDUs transmitted from the eNB 502 to the UE 504. The PDU or PDUs with the embedded poll request signal 510 may include any one or more of the LTE PDUs 506, any one or more of the WLAN PDUs 508, or some combination thereof. The eNB 502 may continue to transmit additional PDUs, with or without the embedded poll request signal 510, across the LTE link and/or the WLAN link while the eNB 502 is waiting for a response to the poll request signal 510.

In response to receiving and/or identifying the poll request signal 510, the UE 504 may prepare and transmit a status response signal 512 to the eNB 502. The status response signal 512 may be transmitted to the eNB 502 across the LTE link, the WLAN link, or some combination thereof.

The status response signal 512 may include information regarding a PDCP SN numbering space, such as the PDCP SN numbering space 300 of Figure 3 and the PDCP SN numbering space 400 of Figure 4, associated with the UE 504, information regarding a reordering window, such as the reordering window 314 of Figures 3 and 4, or some combination thereof. The information included in the status response signal 512 may include an indication of a lowest SN associated with the spaces encompassed by the reordering window, an indication of a highest SN associated with the spaces encompassed by the reordering window, an indication of an amount of missing PDUs, such as missing PDU 404 of Figure 4, within the PDCP SN numbering space, SNs associated with the missing PDUs within the PDCP SN numbering space, a current wrap-around count of the reordering window, a first missing sequence (FMS) number in the PDCP SN numbering space, a SN associated with the highest successfully received PDCP SN on the LTE link, such as LTE link 110 of Figure 1, a SN associated with the highest successfully received PDCP SN on the WLAN link, such as WLAN link 112 of Figure 1, or some combination thereof.

In some embodiments, the status response signal 512 may be initiated in response to detection by the UE 504 that a PDU transmitted from the eNB 502 to the UE 504 is missing or has been corrupted, that the UE has received a configurable number of PDUs since the last status response signal was transmitted, or some combination thereof. The UE 504 may further determine that a reordering timer associated with one or more missing PDUs has expired and transmit the status response signal 512 in response to the expired reordering timer. Accordingly, the status response signal 512 may be transmitted by the UE 504 without receiving a poll request signal from the eNB 502.

In response to receiving the status response signal 512, the eNB 502 may extract and/or analyze the information included in the status response signal 512. The eNB 502 may determine which PDUs should be transmitted to the UE 504 after reception of the status response signal 512 based on the indication of the lowest SN encompassed by the reordering window, the indication of the highest SN encompassed by the reordering window, the SNs associated with the missing PDUs, the current wrap-around count, or some combination thereof.

In some embodiments, the eNB 502 may further or alternatively determine a transmission reliability of the WLAN PDUs 508, the LTE PDUs 506, or some combination thereof. The eNB 502 may determine the transmission reliability based on the amount of missing PDUs, the SNs associated with the missing PDUs, or some combination thereof. The eNB 502 may be aware of which PDUs were transmitted across the LTE link and/or which PDUs were transmitted across the WLAN link and may be able to determine which link the missing PDUs were transmitted across based on the SNs associated with the missing PDUs. Further, if the LTE link operates in RLC AM, the eNB 502 may be aware of which, if any, missing PDUs were transmitted across the LTE link due to the RLC AM and may determine, based on the indication of the amount of PDUs missing and/or the SNs associated with the missing PDUs, that the other missing PDUs were transmitted across the WLAN link.

The eNB 502 may determine how the PDUs to be transmitted from the eNB 502 to the UE 504 should be scheduled based on the status response signal 512 and/or the determined transmission reliability. For example, if the eNB 502 determines that the WLAN link is inefficient (one or more PDUs transmitted across the WLAN link were missing or corrupted), the eNB 502 may determine that fewer PDUs should be scheduled for transmission across the WLAN link and/or that the frequency of transmission of PDUs across the WLAN link should be decreased. The eNB 502 may optimize the transmission of the PDUs based on the status response signal 512 and/or the determined transmission reliability, such as by determining how many PDUs should be transmitted across both the LTE link and the WLAN link and the frequency at which the PDUs should be transmitted across both to provide for the fastest transmission of the PDUs without loss or corruption of any of the PDUs.

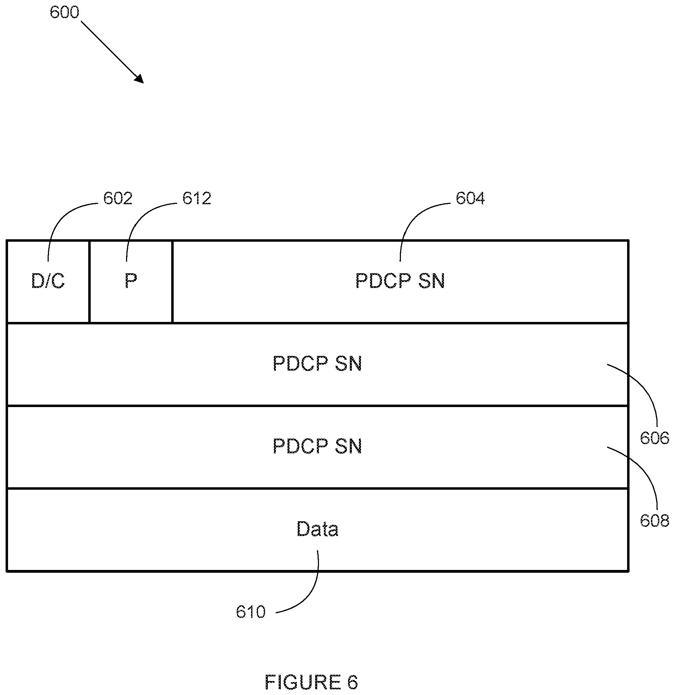

Referring now to Figure 6, wherein a PDCP data PDU configuration 600 with an embedded poll request, according to various embodiments, is shown. Any of the PDUs described throughout this disclosure as being transmitted from an eNB to a UE, such as the LTE PDUs 506 and the WLAN PDUs 508 of Figure 5, may have a same or similar configuration to the PDCP data PDU configuration 600.

The PDCP data PDU configuration 600 may include a data/control indicator 602. The data/control indicator 602 may include one or more bits. The data/control indicator 602 may indicate whether the PDU is operative to transmit data or to act as a control for a UE, such as the UE 106 of Figure 1.

The PDCP data PDU configuration 600 may further include one or more PDCP SN fields, such as PDCP SN fields 604, 606, and 608. The PDCP SN fields 604, 606, and 608 may include one or more bits used for storing a PDCP SN associated with the PDU. In some examples, the PDCP SN fields 604, 606, and 608 may encompass 22 bits. The PDCP SN stored in the PDCP SN fields 604, 606, and 608 may be utilized by the UE for determining a space within a PDCP SN numbering space, such as PDCP SN numbering space 300 of Figure 3 and/or PDCP SN numbering space 400 of Figure 4, where the PDU should be moved. The method for the determination of the movement of the PDU may include the methods of PDU movement described in relation to the PDCP SN numbering space 300 of Figure 3 and/or in relation to the PDCP SN numbering space 400 of Figure 4.

The PDCP data PDU configuration 600 may further include a data field 610. The data field 610 may include the data to be transmitted within the PDU to the UE and/or commands or data that instruct the UE to perform an operation. The data field 610 may include standalone data and/or commands that may be stored and/or operated individually, or may include data and/or commands to be combined with data and/or commands from other PDUs for storage and/or operation.

The PDCP data PDU configuration 600 may further include a poll bit field 612. The poll bit field 612 may replace one bit reserved for storage of a PDCP SN or a reserved bit in legacy PDU configurations. The poll bit field 612 may include a poll request signal, such as the poll request signal 510 of Figure 5. A bit within the poll bit field 612 may be set by a PDCP transmitter, such as the PDCP transmitter 104 of Figure 1, to indicate that an eNB, such as the eNB 102 of Figure 1 and/or the eNB 502 of Figure 5, requests a poll response from a UE, such as the UE 106 of Figure 1 and/or the UE 504 of Figure 5. In response to receiving and/or identifying that the bit within the poll bit field 612 is set, the UE may perform one or more of the operations described in relation to the poll request signal 510 and the poll response signal 512 of Figure 5.

The data/control indicator 602, the poll bit field 612, and/or the PDCP SN fields 604, 606, and 608 may be contained in a header of a PDU that includes the data field 610. The header may be 3 bytes in length total. The PDCP SN fields 604,606, and 608 may be 22 bits in length and the data/control indicator 602 and the poll bit field 612 may be one bit each.

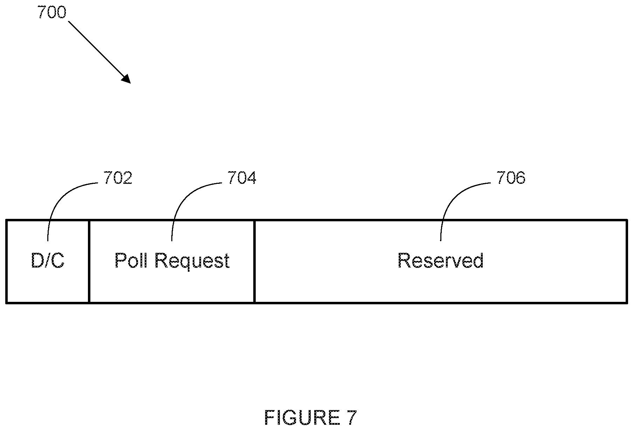

Referring now to Figure 7, wherein an LTE Wi-Fi link aggregation (LWA) PDCP control poll PDU 700 is shown according to various embodiments. The LWA PDCP control poll PDU 700 may be transmitted as a standalone PDU. The LWA PDCP control poll PDU 700 may be generated by a PDCP transmitter, such as the PDCP transmitter 104 of Figure 1, and may be transmitted to a PDCP receiver, such as the PDCP receiver 108 of Figure 1. The LWA PDCP control poll PDU 700 may be transmitted across an LTE link, such as the LTE link 110 of Figure 1, and/or across a WLAN link, such as the WLAN link 112 of Figure 1.

The LWA PDCP control poll PDU 700 may include a data/control indicator 702. The data/control indicator 702 may include one or more bits. The data/control indicator 702 may indicate whether the PDU is operative to transmit data or to act as a control for a UE, such as the UE 106 of Figure 1. In some embodiments, the data/control indicator may be ignored by the UE, which the UE may rather monitor other fields within the LWA PDCP control poll PDU 700 rather than monitoring the data/control indicator 702.

The LWA PDCP control poll PDU 700 may further include a poll request field 704. The poll request field 704 may include one or more bits. The poll request field 704 may include a poll request signal, such as the poll request signal 510 of Figure 5. One or more bits within the poll request field 704 may be set by a PDCP transmitter, such as the PDCP transmitter 104 of Figure 1, to indicate that an eNB, such as the eNB 102 of Figure 1 and/or the eNB 502 of Figure 5, requests a poll response from a UE, such as the UE 106 of Figure 1 and/or the UE 504 of Figure 5. In response to receiving and/or identifying that the one or more bits within the poll request field 612 are set, the UE may perform one or more of the operations described in relation to the poll request signal 510 and the poll response signal 512 of Figure 5.

The LWA PDCP control poll PDU 700 may further include a reserved field 706. The reserved field 706 may include data and/or commands to be utilized internally by the UE. In other embodiments, the reserved field 706 may be ignored by the UE. In some embodiments, the reserved field 706 may include one or more bits that are unused and/or that may be used to enable sub-functionality.

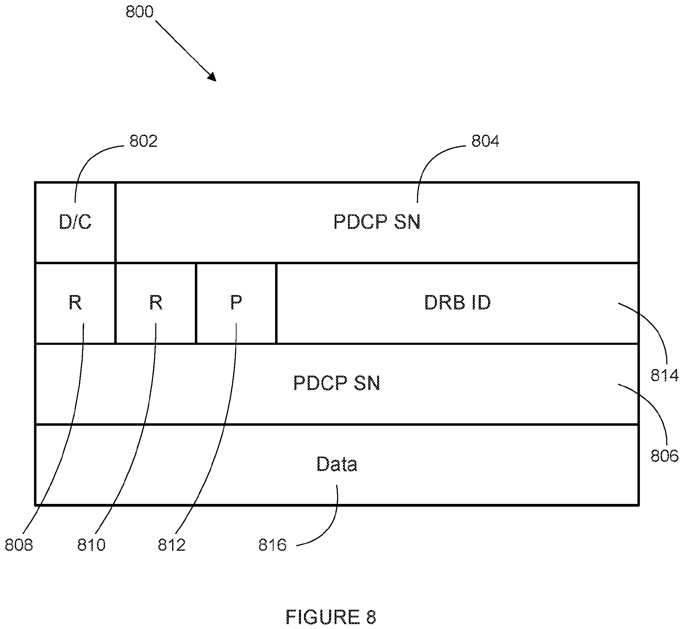

Referring now to Figure 8, wherein a PDCP data PDU configuration 800 with an embedded poll request and data radio bearer (DRB) identifier (ID), according to various embodiments, is shown. Any of the PDUs described throughout this disclosure transmitted across a WLAN link, such as the WLAN PDUs 508 of Figure 5, may have a same or similar configuration to the PDCP data PDU configuration 800. In some embodiments, any of the PDUs described throughout this disclosure transmitted across a LTE link, such as the LTE PDUs 506 of Figure 5, may have a same or similar configuration to the PDCP data PDU configuration 800.

The PDCP data PDU configuration 800 may include a data/control indicator 802. The data/control indicator 802 may include one or more bits. The data/control indicator 802 may indicate whether the PDU is operative to transmit data or to act as a control for a UE, such as the UE 106 of Figure 1.

The PDCP data PDU configuration 800 may further include one or more PDCP SN fields, such as PDCP SN fields 804 and 806. The PDCP SN fields 804 and 806 may include one or more bits used for storing a PDCP SN associated with the PDU. In some examples, the PDCP SN fields 804 and 806 may encompass 15 bits. The PDCP SN stored in the PDCP SN fields 804 and 806 may be utilized by the UE for determining a space within a PDCP SN numbering space, such as PDCP SN numbering space 300 of Figure 3 and/or PDCP SN numbering space 400 of Figure 4, where the PDU should be moved. The method for the determination of the movement of the PDU may include the methods of PDU movement described in relation to the PDCP SN numbering space 300 of Figure 3 and/or in relation to the PDCP SN numbering space 400 of Figure 4.

The PDCP data PDU configuration 800 may further include one or more reserved fields, such as the reserved fields 808 and 810. The reserved fields 808 and 810 may include data and/or commands to be utilized internally by the UE. In other embodiments, the reserved fields 808 and 810 may be ignored by the UE.

The PDCP data PDU configuration 800 may further include a poll bit field 812. The poll bit field 812 may replace one bit for storage of a PDCP SN or a reserved bit in legacy PDU configurations. The poll bit field 812 may include a poll request signal, such as the poll request signal 510 of Figure 5. A bit within the poll bit field 812 may be set by a PDCP transmitter, such as the PDCP transmitter 104 of Figure 1, to indicate that an eNB, such as the eNB 102 of Figure 1 and/or the eNB 502 of Figure 5, requests a poll response from a UE, such as the UE 106 of Figure 1 and/or the UE 504 of Figure 5. In response to receiving and/or identifying that the bit within the poll bit field 812 is set, the UE may perform one or more of the operations described in relation to the poll request signal 510 and the poll response signal 512 of Figure 5.

The PDCP data PDU configuration 800 may further include a DRB ID field 814. The DRB ID field 814 may store a DRB ID. The DRB ID may be associated with a PDCP transmitter, such PDCP transmitter 104 of Figure 1, that generated and/or transmitted the PDU. Each PDCP transmitter may be associated with a DRB ID unique to the PDCP transmitter. In some embodiments, the PDCP data PDU configuration 800 may use the same set of sequence numbers for PDUs transmitted from different PDCP transmitters and utilize the DRB ID to differentiate between the PDUs.

The PDCP data PDU configuration 800 may further include a data field 816. The data field 816 may include the data to be transmitted within the PDU to the UE and/or commands or data that instruct the UE to perform an operation. The data field 816 may include standalone data and/or commands that may be stored and/or operated individually, or may include data and/or commands to be combined with data and/or commands from other PDUs for storage and/or operation.

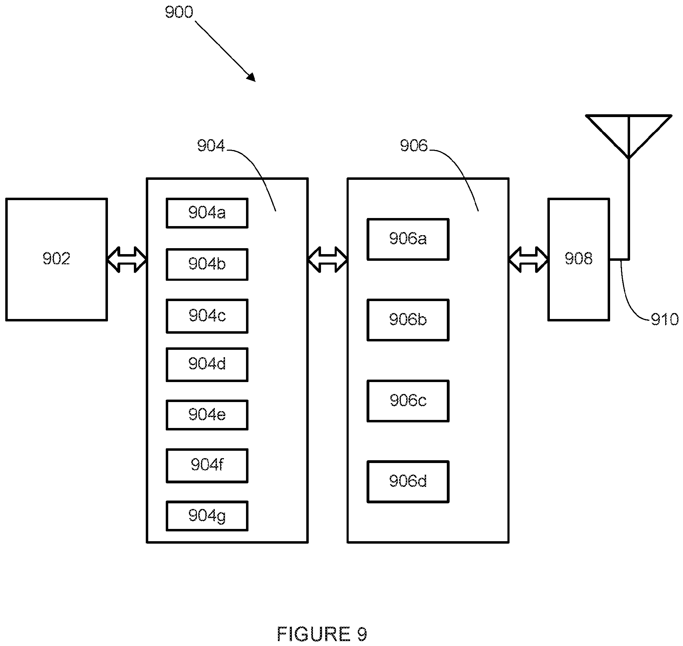

Embodiments described herein may be implemented into a system using any suitably configured hardware and/or software. Figure 9 illustrates, for one embodiment, example components of an electronic device 900. In embodiments, the electronic device 900 may be a user equipment (UE), such as UE 106 of Figure 1, an evolved NodeB (eNB), such as eNB 102 of Figure 1, or some other electronic device. In some embodiments, the electronic device 900 may include application circuitry 902, baseband circuitry 904, Radio Frequency (RF) circuitry 906, front-end module (FEM) circuitry 908 and one or more antennas 910, coupled together at least as shown. The application circuitry 902, the baseband circuitry 904, or some combination thereof, may include the PDCP transmitter 104 and/or the PDCP receiver 108 of Figure 1, or portions thereof, and may execute and/or perform one or more processes, techniques, and/or methods executed and/or performed by the PDCP transmitter 104 and/or the PDCP receiver 108 as described herein, or portions thereof.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

The application circuitry 902 may include one or more application processors. For example, the application circuitry 902 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 904 may include circuitry such as, but not limited to, one or more single-core or multi-core processors. The baseband circuitry 904 may include one or more baseband processors and/or control logic to process baseband signals received from a receive signal path of the RF circuitry 906 and to generate baseband signals for a transmit signal path of the RF circuitry 906. Baseband processing circuity 904 may interface with the application circuitry 902 for generation and processing of the baseband signals and for controlling operations of the RF circuitry 906. For example, in some embodiments, the baseband circuitry 904 may include a second generation (2G) baseband processor 904a, third generation (3G) baseband processor 904b, fourth generation (4G) baseband processor 904c, and/or other baseband processor(s) 904d for other existing generations. The baseband circuitry 904 (e.g., one or more of baseband processors 904a-d) may handle various radio control functions that enable communication with one or more radio networks via the RF circuitry 906. The radio control functions may include, but are not limited to, signal modulation/demodulation, encoding/decoding, radio frequency shifting, etc. In some embodiments, modulation/demodulation circuitry of the baseband circuitry 904 may include Fast-Fourier Transform (FFT), precoding, and/or constellation mapping/demapping functionality. In some embodiments, encoding/decoding circuitry of the baseband circuitry 904 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 904 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 904e of the baseband circuitry 904 may be configured to run elements of the protocol stack for signaling of the PHY, MAC, RLC, PDCP and/or RRC layers. In some embodiments, the baseband circuitry may include one or more audio digital signal processor(s) (DSP) 904f. The audio DSP(s) 904f may be include elements for compression/decompression and echo cancellation and may include other suitable processing elements in other embodiments.

The baseband circuitry 904 may further include memory/storage 904g. The memory/storage 904g may be used to load and store data and/or instructions for operations performed by the processors of the baseband circuitry 904. Memory/storage for one embodiment may include any combination of suitable volatile memory and/or nonvolatile memory. The memory/storage 904g may include any combination of various levels of memory/storage including, but not limited to, read-only memory (ROM) having embedded software instructions (e.g., firmware), random access memory (e.g., dynamic random access memory (DRAM)), cache, buffers, etc. The memory/storage 904g may be shared among the various processors or dedicated to particular processors.

Components of the baseband circuitry may be suitably combined in a single chip, a single chipset, or disposed on a same circuit board in some embodiments. In some embodiments, some or all of the constituent components of the baseband circuitry 904 and the application circuitry 902 may be implemented together such as, for example, on a system on a chip (SOC).

In some embodiments, the baseband circuitry 904 may provide for communication compatible with one or more radio technologies. For example, in some embodiments, the baseband circuitry 904 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 904 is configured to support radio communications of more than one wireless protocol may be referred to as multi-mode baseband circuitry.

RF circuitry 906 may enable communication with wireless networks using modulated electromagnetic radiation through a non-solid medium. In various embodiments, the RF circuitry 906 may include switches, filters, amplifiers, etc. to facilitate the communication with the wireless network. RF circuitry 906 may include a receive signal path which may include circuitry to down-convert RF signals received from the FEM circuitry 908 and provide baseband signals to the baseband circuitry 904. RF circuitry 906 may also include a transmit signal path which may include circuitry to up-convert baseband signals provided by the baseband circuitry 904 and provide RF output signals to the FEM circuitry 908 for transmission.

In some embodiments, the RF circuitry 906 may include a receive signal path and a transmit signal path. The receive signal path of the RF circuitry 906 may include mixer circuitry 906a, amplifier circuitry 906b and filter circuitry 906c. The transmit signal path of the RF circuitry 906 may include filter circuitry 906c and mixer circuitry 906a. RF circuitry 906 may also include synthesizer circuitry 906d for synthesizing a frequency for use by the mixer circuitry 906a of the receive signal path and the transmit signal path. In some embodiments, the mixer circuitry 906a of the receive signal path may be configured to down-convert RF signals received from the FEM circuitry 908 based on the synthesized frequency provided by synthesizer circuitry 906d. The amplifier circuitry 906b may be configured to amplify the down-converted signals and the filter circuitry 906c may be a low-pass filter (LPF) or band-pass filter (BPF) configured to remove unwanted signals from the down-converted signals to generate output baseband signals. Output baseband signals may be provided to the baseband circuitry 904 for further processing. In some embodiments, the output baseband signals may be zero-frequency baseband signals, although this is not a requirement. In some embodiments, mixer circuitry 906a of the receive signal path may comprise passive mixers, although the scope of the embodiments is not limited in this respect.

In some embodiments, the mixer circuitry 906a of the transmit signal path may be configured to up-convert input baseband signals based on the synthesized frequency provided by the synthesizer circuitry 906d to generate RF output signals for the FEM circuitry 908. The baseband signals may be provided by the baseband circuitry 904 and may be filtered by filter circuitry 906c. The filter circuitry 906c may include a low-pass filter (LPF), although the scope of the embodiments is not limited in this respect.

In some embodiments, the mixer circuitry 906a of the receive signal path and the mixer circuitry 906a of the transmit signal path may include two or more mixers and may be arranged for quadrature downconversion and/or upconversion respectively. In some embodiments, the mixer circuitry 906a of the receive signal path and the mixer circuitry 906a of the transmit signal path may include two or more mixers and may be arranged for image rejection (e.g., Hartley image rejection). In some embodiments, the mixer circuitry 906a of the receive signal path and the mixer circuitry 906a may be arranged for direct downconversion and/or direct upconversion, respectively. In some embodiments, the mixer circuitry 906a of the receive signal path and the mixer circuitry 906a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 906 may include analog-to-digital converter (ADC) and digital-to-analog converter (DAC) circuitry and the baseband circuitry 904 may include a digital baseband interface to communicate with the RF circuitry 906.

In some dual-mode embodiments, a separate radio IC circuitry may be provided for processing signals for each spectrum, although the scope of the embodiments is not limited in this respect.

In some embodiments, the synthesizer circuitry 906d may be a fractional-N synthesizer or a fractional N/N+1 synthesizer, although the scope of the embodiments is not limited in this respect as other types of frequency synthesizers may be suitable. For example, synthesizer circuitry 906d may be a delta-sigma synthesizer, a frequency multiplier, or a synthesizer comprising a phase-locked loop with a frequency divider.

The synthesizer circuitry 906d may be configured to synthesize an output frequency for use by the mixer circuitry 906a of the RF circuitry 906 based on a frequency input and a divider control input. In some embodiments, the synthesizer circuitry 906d may be a fractional N/N+1 synthesizer.

In some embodiments, frequency input may be provided by a voltage controlled oscillator (VCO), although that is not a requirement. Divider control input may be provided by either the baseband circuitry 904 or the applications processor 902 depending on the desired output frequency. In some embodiments, a divider control input (e.g., N) may be determined from a look-up table based on a channel indicated by the applications processor 902.

Synthesizer circuitry 906d of the RF circuitry 906 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 906d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 906 may include an IQ/polar converter.

FEM circuitry 908 may include a receive signal path which may include circuitry configured to operate on RF signals received from one or more antennas 910, amplify the received signals and provide the amplified versions of the received signals to the RF circuitry 906 for further processing. FEM circuitry 908 may also include a transmit signal path which may include circuitry configured to amplify signals for transmission provided by the RF circuitry 906 for transmission by one or more of the one or more antennas 910.

In some embodiments, the FEM circuitry 908 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 906). The transmit signal path of the FEM circuitry 908 may include a power amplifier (PA) to amplify input RF signals (e.g., provided by RF circuitry 906), and one or more filters to generate RF signals for subsequent transmission (e.g., by one or more of the one or more antennas 910.

In some embodiments, the electronic device 900 may include additional elements such as, for example, memory/storage, display, camera, sensor, and/or input/output (I/O) interface.

In some embodiments, the electronic device 900 may be configured to perform one or more processes, techniques, and/or methods as described herein, or portions thereof.

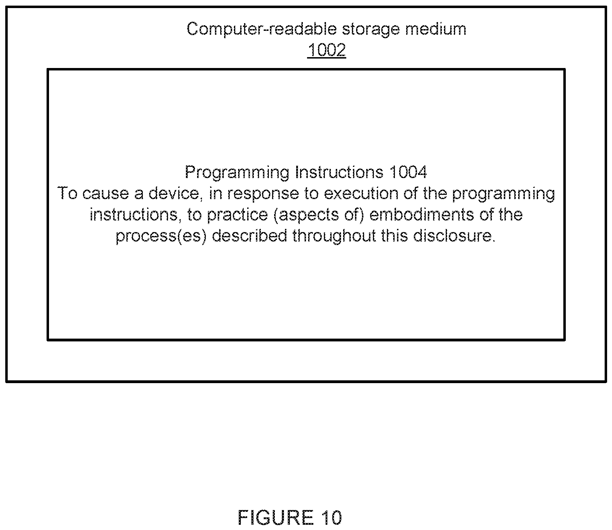

As will be appreciated by one skilled in the art, the present disclosure may be embodied as methods or computer program products. Accordingly, the present disclosure, in addition to being embodied in hardware as earlier described, may take the form of an entirely software embodiment (including firmware, resident software, micro-code, etc.) or an embodiment combining software and hardware aspects that may all generally be referred to as a "circuit," "module" or "system." Furthermore, the present disclosure may take the form of a computer program product embodied in any tangible or non-transitory medium of expression having computer-usable program code embodied in the medium. Figure 10 illustrates an example computer-readable storage medium 1002 that may be suitable for use to store instructions that cause an apparatus, in response to execution of the instructions by the apparatus, to practice selected aspects of the present disclosure. In some embodiments, the computer-readable storage medium 1002 may be non-transitory. As shown, computer-readable storage medium 1002 may include a number of programming instructions 1004. Programming instructions 1004 may be configured to enable a device, e.g., eNB 102, UE 106, and/or similar computing devices, in response to execution of the programming instructions, to implement (aspects of) any of the methods and/or elements described throughout this disclosure, including the methods described in relation to the PDCP SN numbering space 300 of Figure 3 and/or the PDCP SN numbering space 400 of Figure 4, and the elements of the PDCP data PDU configuration 600 of Figure 6, the LWA PDCP control poll PDU 700 of Figure 7 and/or the PDCP data PDU configuration 800 of Figure 8. In alternate embodiments, programming instructions 1004 may be disposed on multiple computer-readable storage media 1002 instead. In still other embodiments, programming instructions 1004 may be disposed on computer-readable storage media 1002 that is transitory in nature, such as, signals.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non- exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer- usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer- usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

It will be apparent to those skilled in the art that various modifications and variations can be made in the disclosed embodiments of the disclosed device and associated methods without departing from the scope of the claims. Thus, it is intended that the present disclosure covers the modifications and variations of the embodiments disclosed above provided that the modifications and variations come within the scope of any claims.

## Claims

1. An evolved NodeB, eNB, for requesting feedback from a packet data convergence protocol, PDCP, receiver, comprising:
radio frequency, RF, circuitry; and
baseband circuitry, coupled with the RF circuitry, to:
identify a packet data unit, PDU, to be transmitted to the PDCP receiver, the PDCP receiver to aggregate a first group of PDUs transmitted via a long term evolution, LTE, link and a second group of PDUs transmitted via a wireless local area network, WLAN, link;
embed, within the PDU, a poll request for a status of aggregation by the PDCP receiver; and
cause the RF circuitry to transmit the PDU embedded with the poll request to the PDCP receiver, wherein
the RF circuitry is to receive a transmission from the PDCP receiver that includes information related to the status of aggregation of the PDUs communicated across the LTE link and the WLAN link, the information including an indication of a sequence number associated with a lower edge of an ordering window of the PDCP receiver;
the baseband circuitry is to:
identify a PDU associated with the sequence number; and
cause the RF circuitry to transmit the PDU associated with the sequence number to the PDCP receiver in response to the reception of the transmission from the PDCP receiver.

2. The eNB of claim 1, wherein:
the RF circuitry is to receive a transmission from the PDCP receiver that includes the status of aggregation by the PDCP receiver; and
the baseband circuitry is to determine a reliability of the WLAN link based, at least in part, on the transmission from the PDCP.

3. The eNB of claim 2, wherein the status of aggregation by the PDCP receiver is to indicate a count of lost PDUs within the aggregation by the PDCP receiver, and wherein the reliability of the WLAN link is to be determined based, at least in part, on the count of lost PDUs.

4. The eNB of claim 2, wherein the status of aggregation by the PDCP receiver is to indicate one or more sequence numbers of lost PDUs, and wherein the baseband circuitry is further to determine which PDUs of the second group of PDUs were lost based, at least in part, on the one or more sequence numbers of the lost PDUs.

5. The eNB of any of the claims 1-4, wherein the eNB is to determine how many PDUs are to be transmitted to the PDCP receiver via the WLAN link based, at least in part, on the transmission from the PDCP receiver.

6. An apparatus of a user equipment, UE, that aggregates packet data units, PDUs, communicated across a long term evolution, LTE, link and a wireless local area network, W_{LAN}, link and provides a status of aggregation to an enhanced NodeB, eNB, link, comprising:
radio frequency, RF, circuitry to receive a PDU from the eNB; and
baseband circuitry, coupled with the RF circuitry, to:
identify a poll request for the status of aggregation embedded within the PDU;
generate a transmission including information related to the status of aggregation by the PDCP receiver of the PDUs communicated across the LTE link and the WLAN link, the information including an indication of a sequence number associated with a lower edge of an ordering window of the PDCP receiver; and
cause the RF circuitry to transmit the transmission to the eNB in response to the identification of the poll request,
wherein the RF circuitry then receives from the eNB a PDU associated with the indicated sequence number.

7. The UE of claim 6, wherein the information related to the status of aggregation is to include an indication of a number of the PDUs communicated across the LTE link and the WLAN link that were lost.

8. The UE of any of the claims 6 and 7, wherein the information related to the status of aggregation is to include a sequence number associated with a first missing PDU from the PDUs communicated across the LTE link and the WLAN link.

9. A method for requesting feedback from a packet data convergence protocol, PDCP, receiver by an evolved NodeB, eNB, comprising:
identifying, by the eNB, a packet data unit, PDU, to be transmitted to the PDCP receiver that aggregates a first group of PDUs transmitted via a long term evolution, LTE, link and a second group of PDUs transmitted via a wireless local area network, WLAN, link from a WLAN termination point, WT, coupled to the eNB;
embedding, by the eNB, a poll request, that requests a status of aggregation by the PDCP receiver, within the identified PDU;
transmitting, by the eNB, the PDU, with the the poll request embedded within, to the PDCP receiver
receiving, by the eNB, a transmission from the PDCP receiver that includes information related to the status of aggregation of the PDUs communicated across the LTE link and the WLAN link, the information including an indication of a sequence number associated with a lower edge of an ordering window of the PDCP receiver;
identifying, by the eNB, a PDU associated with the sequence number; and
transmitting, by the eNB, the PDU associated with the sequence number to the PDCP receiver in response to the reception of the transmission from the PDCP receiver.

10. The method of claim 9, wherein the method further comprises:
receiving, by the eNB, a transmission from the PDCP receiver that includes the status of aggregation by the PDCP receiver; and
determining, by the eNB, a reliability of the WLAN link based, at least in part, on the transmission from the PDCP.

11. One or more computer-readable media comprising instructions which, when executed by a computer, cause the computer to perform the methods of any of the claims 9 and 10.

12. A method by which a user equipment, UE, aggregates packet data units, PDUs, communicated across a long term evolution, LTE, link and a wireless local area network, WLAN, link and provides a status of aggregation to an enhanced NodeB, eNB, comprising:
receiving a PDU from the enhanced NodeB, eNB;
identifying a poll request for the status of aggregation embedded within the PDU;
transmitting the status of aggregation of the PDUs, received across the LTE link and the WLAN link, to the eNB in response to the identification of the poll request, the status of aggregation including an indication of a sequence number associated with a lower edge of an ordering window of the PDCP receiver; and
receiving from the eNB a PDU associated with the indicated sequence number.

13. The method of claim 12, wherein the status of aggregation includes a sequence number associated with a first missing PDU from the PDUs communicated across the LTE link and the WLAN link.

14. One or more computer-readable media comprising instructions which, when executed by a computer, cause the computer to perform the methods of any of the claims 12 and 13.

## Patentansprüche

1. Evolvierter Knoten B, eNB, zum Anfordern von Rückmeldung von einem Paketdatenkonvergenzprotokoll-,PDCP-,Empfänger, umfassend:
eine Hochfrequenz-,HF,-Schaltungsanordnung;
eine Basisband-Schaltungsanordnung, die mit der HF-Schaltungsanordnung gekoppelt ist, zum:
Identifizieren einer Paketdateneinheit, PDU, die an den PDCP-Empfänger gesendet werden soll, wobei der PDCP eine erste Gruppe von PDUs, die über eine Verbindung des Long Term Evolution, LTE, gesendet werden, und eine zweite Gruppe von PDUs aggregiert, die über eine Verbindung eines drahtlosen lokalen Netzwerks, WLAN, gesendet werden;
Einbetten einer Abfrageanforderung für einen Status von Aggregation durch den PDCP-Empfänger innerhalb der PDU; und
Veranlassen der HF-Schaltungsanordnung zum Senden der in die Abfrageanforderung eingebetteten PDU an den PDCP-Empfänger, wobei
die HF-Schaltungsanordnung zum Empfangen einer Übertragung vom PDCP-Empfänger ist, die Informationen in Bezug auf den Aggregationsstatus der über die LTE-Verbindung und die WLAN-Verbindung kommunizierten PDUs umfasst, wobei die Informationen eine Anzeige einer Reihenfolgenummer umfassen, die mit einem unteren Rand eines Ordnungsfensters des PDCP-Empfängers assoziiert ist;
wobei die Basisband-Schaltungsanordnung ist zum:
Identifizieren einer PDU, die mit der Reihenfolgenummer assoziiert ist; und
Veranlassen der HF-Schaltungsanordnung zum Senden der mit der Reihenfolgenummer assoziierten PDU an den PDCP-Empfänger in Reaktion auf den Empfang der Übertragung vom PDCP-Empfänger.

2. eNB nach Anspruch 1, wobei:
die HF-Schaltungsanordnung zum Empfangen einer Übertragung vom PDCP-Empfänger ist, die den Status von Aggregation durch den PDCP-Empfänger umfasst; und
die Basisband-Schaltungsanordnung zum Bestimmen einer Zuverlässigkeit der WLAN-Verbindung wenigstens zum Teil basierend auf der Übertragung vom PDCP ist.

3. eNB nach Anspruch 2, wobei der Status von Aggregation durch den PDCP-Empfänger zum Anzeigen einer Zählung von verlorengegangenen PDUs innerhalb der Aggregation durch den PDCP-Empfänger ist, wobei die Zuverlässigkeit der WLAN-Verbindung wenigstens zum Teil basierend auf der Zählung von verlorengegangenen PDUs bestimmt werden soll.

4. eNB nach Anspruch 2, wobei der Status von Aggregation durch den PDCP-Empfänger zum Anzeigen einer oder mehrerer Reihenfolgenummern von verlorengegangenen PDUs ist, und wobei die Basisband-Schaltungsanordnung ferner zum Bestimmen, welche PDUs der zweiten Gruppe von PDUs verlorengingen, wenigstens zum Teil basierend auf der einen oder mehreren Reihenfolgenummern der verlorengegangenen PDUs ist.

5. eNB nach einem der Ansprüche 1 bis 4, wobei der eNB zum Bestimmen, wie viele PDUs über die WLAN-Verbindung an den PDCP-Empfänger gesendet werden sollen, wenigstens zum Teil basierend auf der Übertragung vom PDCP-Empfänger ist.

6. Vorrichtung eines Benutzer-Equipments, UE, das Paketdateneinheiten, PDUs, aggregiert, die über eine Verbindung des Long Term Evolution, LTE, und eine Verbindung eines drahtlosen lokalen Netzwerks, WLAN, kommuniziert werden, und einen Aggregationsstatus für einen erweiterten Knoten B, eNB, bereitstellt, umfassend:
ein Hochfrequenz-,HF-,Schaltungsanordnung zum Empfangen einer PDU vom eNB; und
eine Basisband-Schaltungsanordnung, die mit der HF-Schaltungsanordnung gekoppelt ist, zum:
Identifizieren einer Abfrageanforderung für den Aggregationsstatus, die innerhalb der PDU eingebettet ist;
Erzeugen einer Übertragung, die Informationen in Bezug auf den Status von Aggregation durch PDCP-Empfänger der über die LTE-Verbindung und die WLAN-Verbindung kommunizierten PDUs umfasst, wobei die Informationen eine Anzeige einer Reihenfolgenummer umfassen, die mit einem unteren Rand eines Ordnungsfensters des PDCP-Empfängers assoziiert ist; und
Veranlassen der HF-Schaltungsanordnung zum Senden der Übertragung an den eNB in Reaktion auf die Identifikation der Abfrageanforderung,
wobei die HF-Schaltungsanordnung dann eine mit der angezeigten Reihenfolgenummer assoziierte PDU vom eNB empfängt.

7. UE nach Anspruch 6, wobei die Informationen in Bezug auf den Aggregationsstatus eine Anzeige einer Anzahl der über die LTE-Verbindung und die WLAN-Verbindung kommunizierten PDUs, die verlorengingen, umfassen.

8. UE nach einem der Ansprüche 6 und 7, wobei die Informationen in Bezug auf den Aggregationsstatus eine Reihenfolgenummer umfassen, die mit einer ersten fehlenden PDU aus den über die LTE-Verbindung und die WLAN-Verbindung kommunizierten PDUs assoziiert ist.

9. Verfahren zur Anforderung von Rückmeldung von einem Paketdatenkonvergenzprotokoll-, PDCP-, Empfänger durch einen evolvierten Knoten B, eNB, umfassend:
Identifizieren einer Paketdateneinheit, PDU, durch den eNB, die an den PDCP-Empfänger gesendet werden soll, der eine erste Gruppe von PDUs, die über eine Verbindung des Long Term Evolution, LTE, gesendet werden, und eine zweite Gruppe von PDUs aggregiert, die über eine Verbindung eines drahtlosen lokalen Netzwerks, WLAN, von einem WLAN-Abschlusspunkt, WT, gesendet werden, der mit dem eNB gekoppelt ist;
Einbetten einer Abfrageanforderung, die einen Status von Aggregation durch den PDCP-Empfänger anfordert, durch den eNB innerhalb der identifizierten PDU;
Senden der PDU mit der darin eingebetteten Abfrageanforderung durch den eNB an den PDCP-Empfänger,
Empfangen einer Übertragung durch den eNB vom PDCP-Empfänger, die Informationen in Bezug auf den Aggregationsstatus der über die LTE-Verbindung und die WLAN-Verbindung kommunizierten PDUs umfasst, wobei die Informationen eine Anzeige einer Reihenfolgenummer umfassen, die mit einem unteren Rand eines Ordnungsfensters des PDCP-Empfängers assoziiert ist;
Identifizieren einer PDU, die mit der Reihenfolgenummer assoziiert ist, durch den eNB; und
Senden der mit der Reihenfolgenummer assoziierten PDU durch den eNB an den PDCP-Empfänger in Reaktion auf den Empfang der Übertragung vom PDCP-Empfänger.

10. Verfahren nach Anspruch 9, wobei das Verfahren ferner umfasst:
Empfangen einer Übertragung durch den eNB vom PDCP-Empfänger, die den Status von Aggregation durch den PDCP-Empfänger umfasst; und
Bestimmen einer Zuverlässigkeit der WLAN-Verbindung durch den eNB wenigstens zum Teil basierend auf der Übertragung vom PDCP.

11. Ein oder mehrere computerlesbare Medien, umfassend Anweisungen, die bei Ausführung durch einen Computer den Computer zum Durchführen der Verfahren nach einem der Ansprüche bis 9 und 10 veranlassen.

12. Verfahren, durch welches ein Benutzer-Equipment, UE, Paketdateneinheiten, PDUs, aggregiert, die über eine Verbindung des Long Term Evolution, LTE, und eine Verbindung eines drahtlosen lokalen Netzwerks, WLAN, kommuniziert werden, und einen Aggregationsstatus für einen erweiterten Knoten B, eNB, bereitstellt, umfassend:
Empfangen einer PDU vom erweiterten Knoten B, eNB;
Identifizieren einer Abfrageanforderung für den Aggregationsstatus, die innerhalb der PDU eingebettet ist;
Senden des Aggregationsstatus der PDUs, die über die LTE-Verbindung und die WLAN-Verbindung empfangen werden, an den eNB in Reaktion auf die Identifikation der Abfrageanforderung, wobei der Aggregationsstatus eine Anzeige einer Reihenfolgenummer umfasst, die mit einem unteren Rand eines Ordnungsfensters des PDCP-Empfängers assoziiert ist; und
Empfangen einer mit der angezeigten Reihenfolgenummer assoziierten PDU vom eNB.

13. Verfahren nach Anspruch 12, wobei der Aggregationsstatus eine Reihenfolgenummer umfasst, die mit einer ersten fehlenden PDU aus den über die LTE-Verbindung und die WLAN-Verbindung kommunizierten PDUs assoziiert ist.

14. Ein oder mehrere computerlesbare Medien, umfassend Anweisungen, die bei Ausführung durch einen Computer den Computer zum Durchführen der Verfahren nach einem der der Ansprüche bis 12 und 13 veranlassen.

## Revendications

1. Nœud B évolué, eNB, destiné à demander une rétroaction à partir d'un récepteur à protocole de convergence de données par paquets, PDCP, comprenant :
une circuiterie radiofréquence, RF ; et
une circuiterie de bande de base, couplée à la circuiterie RF, pour :
identifier une unité de données par paquets, PDU, à transmettre au récepteur PDCP, le récepteur PDCP étant destiné à agréger un premier groupe de PDU transmises au moyen d'une liaison d'évolution à long terme, LTE, et un second groupe de PDU transmises au moyen d'une liaison de réseau local sans fil, WLAN ;
incorporer, à l'intérieur de la PDU, une requête d'interrogation portant sur un état d'agrégation par le récepteur PDCP ; et
amener la circuiterie RF à transmettre la PDU incorporée à la requête d'interrogation au récepteur PDCP, dans lequel
la circuiterie RF est destinée à recevoir une transmission à partir du récepteur PDCP qui comporte des informations relatives à l'état d'agrégation des PDU communiquées sur la liaison LTE et la liaison WLAN, les informations comportant une indication d'un numéro de séquence associé à un bord inférieur d'une fenêtre de mise en ordre du récepteur PDCP ;
la circuiterie de bande de base étant destinée à :
identifier une PDU associée au numéro de séquence ; et
amener la circuiterie RF à transmettre la PDU associée au numéro de séquence au récepteur PDCP en réponse à la réception de la transmission à partir du récepteur PDCP.

2. eNB selon la revendication 1, dans lequel :
la circuiterie RF est destinée à recevoir une transmission à partir du récepteur PDCP qui comporte l'état d'agrégation par le récepteur PDCP ; et
la circuiterie de bande de base est destinée à déterminer une fiabilité de la liaison WLAN sur la base, au moins en partie, de la transmission à partir du PDCP.

3. eNB selon la revendication 2, dans lequel l'état d'agrégation par le récepteur PDCP sert à indiquer un compte de PDU perdues dans l'agrégation par le récepteur PDCP, et dans lequel la fiabilité de la liaison WLAN doit être déterminée sur la base, au moins en partie du compte de PDU perdues.

4. eNB selon la revendication 2, dans lequel l'état d'agrégation par le récepteur PDCP sert à indiquer un ou plusieurs numéros de séquence de PDU perdues, et dans lequel la circuiterie de bande de base est destinée en outre à déterminer les PDU du second groupe de PDU qui ont été perdues sur la base, au moins en partie des un ou plusieurs numéros de séquence des PDU perdues.

5. eNB selon l'une quelconque des revendications 1 à 4, dans lequel l'eNB est destiné à déterminer le nombre de PDU qui doivent être transmises au récepteur PDCP au moyen de la liaison WLAN sur la base, au moins en partie, de la transmission à partir du récepteur PDCP.

6. Appareil d'un équipement utilisateur, UE, qui agrège des unités de données par paquets, PDU, communiquées sur une liaison d'évolution à long terme, LTE, et une liaison de réseau local sans fil, WLAN, et fournit un état d'agrégation à un nœud B évolué, eNB, comprenant :
une circuiterie radiofréquence, RF, destinée à recevoir une PDU de l'eNB ; et
une circuiterie de bande de base, couplée à la circuiterie RF, pour :
identifier une requête d'interrogation de l'état d'intégration incorporée dans la PDU ;
générer une transmission comportant des informations relatives à l'état d'agrégation par le récepteur PDCP des PDU communiquées sur la liaison LTE et la liaison WLAN, les informations comportant une indication d'un numéro de séquence associé à un bord inférieur d'une fenêtre de mise en ordre du récepteur PDCP ; et
amener la circuiterie RF à transmettre la transmission à l'eNB en réponse à l'identification de la requête d'interrogation, la circuiterie RF recevant alors à partir de l'eNB une PDU associée au numéro de séquence indiqué.

7. UE selon la revendication 6, dans lequel les informations relatives à l'état d'agrégation doivent inclure une indication d'un nombre des PDU communiquées sur la liaison LTE et la liaison WLAN qui ont été perdues.

8. UE selon l'une quelconque des revendications 6 et 7, dans lequel les informations relatives à l'état d'agrégation doivent inclure un numéro de séquence associée à une première PDU manquante parmi les PDU communiquées sur la liaison LTE et la liaison WLAN.

9. Procédé de requête d'une rétroaction à partir d'un récepteur à protocole de convergence de données par paquets, PDCP, par un nœud B évolué, eNB, comprenant :
l'identification, par l'eNB, d'une unité de données par paquets, PDU, à transmettre au récepteur PDCP, le récepteur PDCP étant destiné à agréger un premier groupe de PDU transmises au moyen d'une liaison d'évolution à long terme, LTE, et un second groupe de PDU transmises au moyen d'une liaison de réseau local sans fil, WLAN, depuis un point de terminaison de WLAN, WT, couplé à l'eNB ;
l'incorporation, par l'eNB, d'une requête d'interrogation, qui demande un état d'agrégation par le récepteur PDCP, au sein de la PDU identifiée ;
la transmission, par l'eNB, de la PDU, avec la requête d'interrogation incorporée à celle-ci, au récepteur PDCP,
la réception, par l'eNB, d'une transmission à partir du récepteur PDCP qui comporte des informations relatives à l'état d'agrégation des PDU communiquées sur la liaison LTE et la liaison WLAN, les informations comportant une indication d'un numéro de séquence associé à un bord inférieur d'une fenêtre de mise en ordre du récepteur PDCP ;
l'identification, par l'eNB, d'une PDU associée au numéro de séquence ; et
la transmission, par l'eNB, de la PDU associée au numéro de séquence au récepteur PDCP en réponse à la réception de la transmission à partir du récepteur PDCP.

10. Procédé selon la revendication 9, le procédé comprenant en outre :
la réception, par l'eNB, d'une transmission à partir du récepteur PDCP qui comporte l'état d'agrégation par le récepteur PDCP ; et
la détermination, par l'eNB, d'une fiabilité de la liaison WLAN sur la base, au moins en partie, de la transmission à partir du PDCP.

11. Un ou plusieurs supports lisibles par ordinateur comprenant des instructions qui, à leur exécution par un ordinateur, amènent l'ordinateur à réaliser les procédés selon l'une quelconque des revendications 9 et 10.

12. Procédé par lequel un équipement utilisateur, UE, agrège des unités de données par paquets, PDU, communiquées sur une liaison d'évolution à long terme, LTE, et une liaison de réseau local sans fil, WLAN, et fournit un état d'agrégation à un nœud B évolué, eNB, comprenant :
la réception d'une PDU à partir du nœud B évolué, eNB ;
l'identification d'une requête d'interrogation portant sur l'état d'agrégation incorporée dans la PDU ; et
la transmission de l'état d'agrégation des PDU, reçues sur la liaison LTE et la liaison WLAN, à l'eNB en réponse à l'identification de la requête d'interrogation, l'état d'agrégation comportant une indication d'un numéro de séquence associé à un bord inférieur d'une fenêtre de mise en ordre du récepteur PDCP ; et
la réception depuis l'eNB d'une PDU associée au numéro de séquence indiqué.

13. Procédé selon la revendication 12, dans lequel l'état d'agrégation comporte un numéro de séquence associé à une première PDU manquante parmi les PDU communiquées sur la liaison LTE et sur la liaison WLAN.

14. Un ou plusieurs supports lisibles par ordinateur comprenant des instructions qui, à leur exécution par un ordinateur, amènent l'ordinateur à réaliser les procédés selon l'une quelconque des revendications 12 et 13.
